(19) Europäisches Patentamt
European Patent Office
Office européen des brevets

(11) **EP 3 016 276 B1**

(12) **FASCICULE DE BREVET EUROPEEN**

(45) Date de publication et mention
de la délivrance du brevet:
**25.07.2018 Bulletin 2018/30**

(51) Int Cl.:
**H02S 50/10** *(2014.01)*

(21) Numéro de dépôt: **15192379.4**

(22) Date de dépôt: **30.10.2015**

(54) **PROCÉDÉ DE DIAGNOSTIC D'UN SYSTÈME PHOTOVOLTAÏQUE**

DIAGNOSEVERFAHREN EINES FOTOVOLTAIKSYSTEMS

METHOD FOR DIAGNOSING A PHOTOVOLTAIC SYSTEM

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **03.11.2014 FR 1460559**

(43) Date de publication de la demande:
**04.05.2016 Bulletin 2016/18**

(73) Titulaire: **COMMISSARIAT À L'ÉNERGIE
ATOMIQUE ET AUX
ÉNERGIES ALTERNATIVES
75015 Paris (FR)**

(72) Inventeurs:
• **PICHENOT, Grégoire
73290 LA MOTTE-SERVOLEX (FR)**
• **KHALED, Imene
73000 CHAMBERY (FR)**

(74) Mandataire: **Novaimo
ActiTech 8
60 avenue Marie Curie
Archamps Technopole
74166 Saint Julien-en-Genevois Cedex (FR)**

(56) Documents cités:
WO-A1-2013/170422     DE-A1-102012 102 932
US-A1- 2010 250 018     US-A1- 2013 307 556

**Description**

L'invention concerne un procédé de diagnostic d'un système photovoltaïque ainsi qu'un système photovoltaïque mettant en oeuvre un tel procédé.

Les systèmes de production d'énergie évoluent et intègrent de plus en plus de sources de production d'énergie renouvelable, et notamment des systèmes photovoltaïques. Pour assurer une optimisation de ces systèmes photovoltaïques, plusieurs méthodes existent pour assurer leur diagnostic afin de détecter des éventuelles anomalies et programmer les réparations adéquates. Les documents WO2013/170422 et DE102012102932 décrivent des procédés de diagnostic des installations photovoltaïques. Une première méthode repose sur l'utilisation d'un ou plusieurs capteur(s) d'irradiance, afin de mesurer l'énergie solaire réelle reçue, d'en déduire la production théorique des modules photovoltaïques du système, puis de comparer la production réelle constatée avec cette production théorique. L'inconvénient de cette méthode est qu'elle induit un coût important puisqu'elle nécessite des capteurs d'irradiance. De plus, il est nécessaire d'avoir un capteur d'irradiance de même orientation que chaque module photovoltaïque à diagnostiquer, ou de faire des calculs de transposition.

Une seconde méthode repose sur un apprentissage du fonctionnement du système photovoltaïque. A partir de mesures de productions d'énergie passées, il est possible d'en déduire un modèle de fonctionnement du système photovoltaïque, qui sert de référence pour détecter ou non une anomalie de fonctionnement. L'inconvénient de cette méthode est qu'elle nécessite la mémorisation d'un nombre important de mesures passées pour être pertinente. Elle est de plus approximative puisque le modèle obtenu par des mesures passées ne permet pas d'atteindre une grande précision du fonctionnement à un instant présent.

Ainsi, un objet général de l'invention est de proposer une solution améliorée pour le diagnostic d'un système photovoltaïque.

Plus précisément, un objet de l'invention est de proposer une solution adaptée à un système photovoltaïque complexe comprenant une multitude de modules photovoltaïques, et permettant une détection fiable et performante d'une défaillance d'un système photovoltaïque.

A cet effet, l'invention repose sur un procédé de diagnostic d'un système photovoltaïque comprenant au moins un sous-champ photovoltaïque comprenant des modules photovoltaïques de même orientation et inclinaison, regroupés en plusieurs ensembles d'au moins un module photovoltaïque comparables, chaque ensemble d'au moins un module étant associé à au moins un capteur de mesure d'une grandeur électrique caractéristique dudit ensemble d'au moins un module, caractérisé en ce qu'il comprend les étapes suivantes :

- mesures d'au moins une grandeur électrique par chaque capteur à plusieurs instants d'une période considérée ;
- analyse des mesures de grandeur électrique comprenant les sous-étapes suivantes :

  - calcul d'une valeur de référence à partir des mesures de grandeur électrique associées à plusieurs ensembles d'au moins un module du même sous-champ photovoltaïque par des itérations permettant de mettre à l'écart à chaque itération des mesures correspondant à des chutes de production d'énergie d'un ensemble d'au moins un module ;
  - comparaison des mesures associées à un ensemble d'au moins un module avec la valeur de référence sur une durée choisie pour en déduire ou non une défaillance dudit ensemble d'au moins un module sur ladite durée.

L'étape de calcul d'une valeur de référence peut comprendre des itérations des sous-étapes suivantes :

- initialisation d'une valeur de référence Pref à partir de tout ou partie des mesures Pmes de grandeur électrique ;
- Mise à l'écart des mesures Pmes de grandeur électrique significativement éloignées de la valeur de référence Pref par un test statistique sur une distribution de valeurs représentatives de l'écart entre les mesures et les valeurs de référence, notamment les valeurs (Pmes-Pref)/max(Pref, Pmes), ce test statistique consistant alors à écarter toutes les mesures Pmes vérifiant :
  $(Pmes-Pref)/max(Pref, Pmes) < -v\sigma$ où v est un paramètre qui peut être fixé préalablement et $\sigma$ est une valeur seuil prédéfinie, et retour à l'étape précédente si les itérations ne sont pas terminées.

L'étape de calcul d'une valeur de référence peut comprendre dans ses itérations la sous-étape supplémentaire suivante :

- détermination empirique de la valeur seuil $\sigma$, et optionnellement de la moyenne $\mu$, comme l'écart type de la distribution statistique de valeurs représentatives de l'écart entre les mesures et les valeurs de référence, notamment (Pmes-Pref)/max(Pref, Pmes), pour toutes les mesures Pmes de grandeur électrique sur la période considérée et pour tous les ensembles d'au moins un module considérés du même sous-champ photovoltaïque.

L'étape de calcul d'une valeur de référence peut comprendre une étape de test de fin d'itérations qui repose sur un compteur de nombre d'itérations, la fin des itérations étant déterminée pour un nombre prédéfini d'itérations, ou qui repose sur le calcul de l'écart des valeurs de référence entre les deux dernières itérations, la fin des itérations étant déterminée lorsque cet écart tombe sous un certain seuil ou qui repose sur la comparaison du nombre de mesures mises à l'écart entre les deux dernières itérations, la fin des itérations étant déterminée lorsque cet écart tombe sous un certain seuil.

L'étape de calcul d'une valeur de référence peut comprendre une étape de traitement statistique des mesures Pmes de grandeur électrique pour écarter les mesures Pmes de grandeur électrique aberrantes, notamment par un test d'Hampel, qui comprend la mise à l'écart des mesures vérifiant le test suivant :

$$| \text{Pmes} - \text{médiane (Pmes)} | > R \quad \text{médiane (Pmes} - \text{médiane (Pmes))}$$

Où R est une constante fixée en fonction du nombre de capteurs du système photovoltaïque.

L'étape de comparaison des mesures de grandeur électrique avec la valeur de référence peut comprendre la comparaison des mesures de grandeur électrique d'un certain capteur avec la valeur de référence selon une analyse statistique des écarts entre lesdites mesures de grandeur électrique et la valeur de référence, prenant en compte l'écart type et/ou la valeur moyenne.

La grandeur électrique mesurée peut être la puissance produite par un ensemble d'au moins un module photovoltaïque à un instant donné ou le courant ou la tension aux bornes d'au moins un module photovoltaïque à un instant donné.

Le procédé de diagnostic d'un système photovoltaïque peut comprendre la mise en oeuvre d'une étape supplémentaire de calcul de la perte d'énergie résultant d'une défaillance du système photovoltaïque, à partir de la différence à chaque instant entre la puissance de référence calculée et la puissance réelle mesurée.

Le procédé de diagnostic d'un système photovoltaïque peut comprendre une étape d'affichage par l'intermédiaire d'une interface homme machine d'un graphe représentant tout ou partie des données suivantes pour un ensemble d'au moins un module photovoltaïque considéré en fonction du temps :

- Le nombre de sous-périodes ou une durée sur une sous-période d'absence de mesures ;
- Le nombre de sous-périodes ou une durée sur une sous-période d'arrêt de production ;
- Le nombre de sous-périodes ou une durée sur une sous-période de défaillance.

L'invention porte aussi sur un système photovoltaïque, caractérisé en ce qu'il comprend au moins un sous-champ photovoltaïque comprenant des modules photovoltaïques de même orientation et inclinaison, regroupés en plusieurs ensembles d'au moins un module photovoltaïque comparables, chaque ensemble d'au moins un module photovoltaïque étant associé à au moins un capteur de mesure d'une grandeur électrique caractéristique dudit ensemble d'au moins un module photovoltaïque, caractérisé en ce qu'il comprend une unité de gestion qui comprend des moyens logiciels qui mettent en oeuvre le procédé de diagnostic du système photovoltaïque tel que décrit précédemment.

Le système photovoltaïque peut comprendre plusieurs sous-champs photovoltaïques d'orientation et/ou inclinaison différentes, et l'unité de gestion peut mettre en oeuvre le procédé de diagnostic du système photovoltaïque tel que décrit précédemment en comparant entre elles les mesures de grandeur électrique d'ensembles d'au moins un module photovoltaïque de même orientation et inclinaison.

Un ensemble d'au moins un module photovoltaïque peut être une chaine de plusieurs modules photovoltaïques connectés en série et le capteur de mesure d'une grandeur électrique peut être intégré dans un onduleur associé à ladite chaine de modules photovoltaïques.

L'invention porte aussi sur un support d'enregistrement de données lisible par un calculateur sur lequel est enregistré un programme d'ordinateur comprenant des moyens logiciels de mise en oeuvre des étapes du procédé de diagnostic tel que décrit précédemment.

Ces objets, caractéristiques et avantages de la présente invention seront exposés en détail dans la description suivante d'un mode d'exécution particulier fait à titre non-limitatif en relation avec les figures jointes parmi lesquelles :

La figure 1 représente un système photovoltaïque selon un mode de réalisation de l'invention.

La figure 2 représente un organigramme du procédé de diagnostic du système photovoltaïque selon le mode de réalisation de l'invention.

La figure 3 représente des courbes de mesures obtenues, selon un scénario choisi, dans une étape de mesure du procédé de diagnostic selon le mode de réalisation de l'invention.

La figure 4 représente d'autres courbes de mesures obtenues selon le scénario choisi dans une étape de mesure du procédé de diagnostic selon le mode de réalisation de l'invention.

Les figures 5a à 5d représentent des courbes de mesures et une courbe de valeurs de référence en fonction du temps lors d'itérations du procédé de diagnostic selon le scénario choisi et le mode de réalisation de l'invention.

La figure 6 concerne une présentation graphique des absences de mesure du système de diagnostic du système photovoltaïque.

La figure 7 concerne une présentation graphique des périodes d'anomalie du système photovoltaïque.

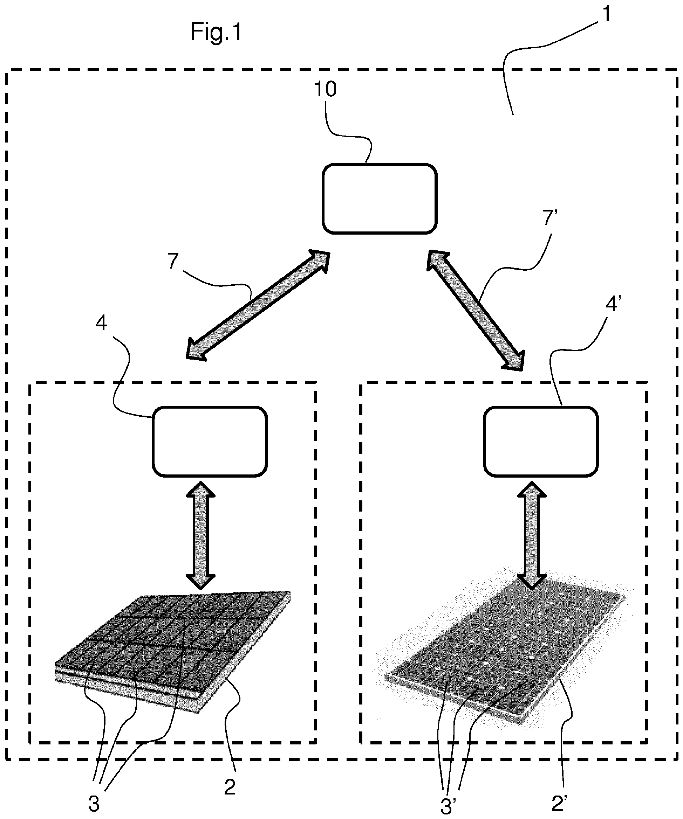

Selon un mode de réalisation de l'invention représenté par la figure 1, un système photovoltaïque 1 comprend les éléments suivants :

- Un champ photovoltaïque comprenant tous les modules photovoltaïques 3, 3' de génération d'énergie électrique ;
- Deux sous-champs photovoltaïques 2, 2' comprenant chacun des modules photovoltaïques 3, 3' de même orientation et inclinaison ;
- Des capteurs 4, 4' de mesure d'une (ou plusieurs) grandeur électrique caractéristique du fonctionnement de modules photovoltaïques, chaque capteur 4, 4' étant associé à un ensemble d'au moins un module photovoltaïque d'un même sous-champ photovoltaïque 2, 2', par exemple associé à une chaîne de modules photovoltaïques connectés en série, que nous appellerons simplement « ensemble de modules » par la suite ;
- Des dispositifs de communication 7, 7' entre les capteurs 4, 4' et une unité de gestion 10 du système photovoltaïque, pour transmettre périodiquement ou sur ordre de l'unité de gestion 10 les mesures effectuées par les capteurs 4, 4'.

L'unité de gestion 10 se présente sous la forme d'une entité de calcul, par exemple comprenant tout calculateur avec un support logiciel et au moins une mémoire électronique, pour mettre en oeuvre les fonctionnalités qui vont être décrites ci-après du procédé de diagnostic du système photovoltaïque 1. Cette unité de gestion 10 peut être physiquement à proximité du champ photovoltaïque ou à distance. Elle peut se présenter sous la forme d'une seule entité physique ou de plusieurs entités, par exemple par la disposition d'une sous-unité par sous-champ photovoltaïque.

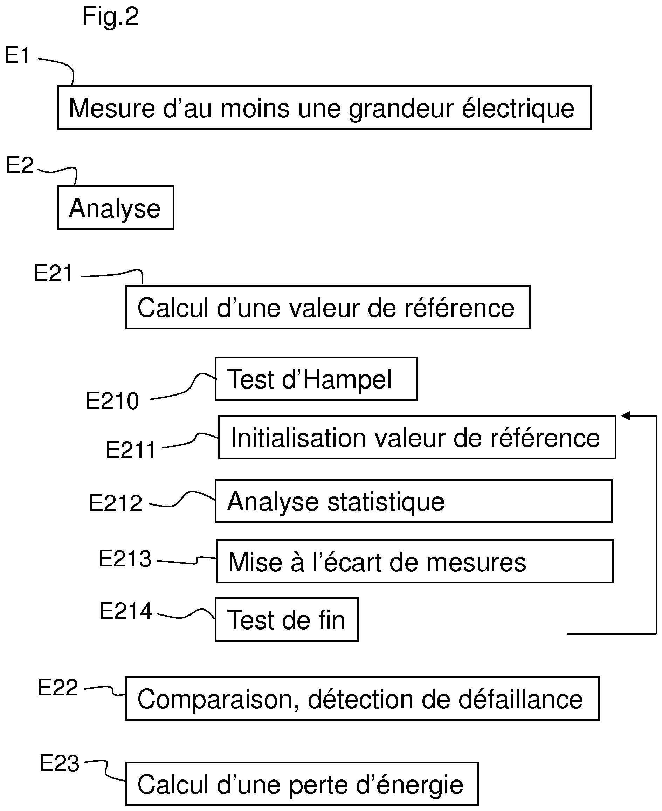

L'unité de gestion 10 met en oeuvre le procédé de diagnostic, représenté schématiquement par l'organigramme de la figure 2, et forme ainsi un dispositif de diagnostic du système photovoltaïque. Ce procédé repose sur l'agrégation de données mesurées sur un sous-champ photovoltaïque, ces données étant comparables car orientées et inclinées de la même manière, de manière à obtenir une valeur de référence représentative du fonctionnement « normal » dudit sous-champ photovoltaïque, pour pouvoir ensuite comparer divers sous-ensembles de production dudit sous-champ photovoltaïque avec cette valeur de référence. La description ci-dessous va détailler un mode de réalisation de l'invention mettant en oeuvre ces principes.

Le procédé de diagnostic comprend une étape E1 de réception périodique des données numériques des mesures d'une grandeur électrique, que nous appellerons plus simplement « mesures », transmises par tout ou partie des capteurs 4, 4' du système photovoltaïque 1.

Avantageusement, cette grandeur électrique mesurée est la puissance électrique fournie par un ensemble de modules photovoltaïques 3, 3' associé au capteur 4, 4' considéré. En variante, cette grandeur électrique pourrait être la tension aux bornes de cet ensemble de modules photovoltaïques, le courant de sortie, continu ou alternatif... Ces mesures transmises par les différents capteurs sont mémorisées dans une mémoire électronique de l'unité de gestion 10. En remarque, il est possible d'utiliser un (ou plusieurs) capteur 4, 4' par module photovoltaïque (dans le cas particulier où l'ensemble de modules est réduit à un seul module), ou de préférence un (ou plusieurs) capteur pour un ensemble de plusieurs modules photovoltaïques du même sous-champ. Par exemple, ces mesures peuvent être réalisées au niveau d'un onduleur associé au sous-champ concerné.

Un mode de réalisation de l'invention consiste à considérer comme ensembles de modules des modules photovoltaïques associés en série, parfois appelés chaines ou par la dénomination anglaise « string », et dont le courant continu produit est transmis à un onduleur qui va transformer ce courant continu en courant alternatif et permettre la compatibilité et la connexion du système photovoltaïque avec un secteur électrique plus vaste ou conventionnel. Dans cette configuration, la grandeur électrique considérée peut être obtenue à partir d'une mesure au niveau de l'onduleur. L'onduleur remplit ainsi aussi la fonction de capteur. Si cette grandeur est la puissance, il existe par exemple trois méthodes possibles pour la mesurer :

- On peut considérer la mesure de puissance continue disponible directement au niveau de l'onduleur ; et/ou

- On peut déduire la puissance par le produit du courant continu et de la tension continue, ces deux grandeurs électriques étant mesurées au niveau de l'onduleur ; et/ou
- On peut déduire la puissance par le produit du courant et de la tension, le courant étant mesuré au niveau de la chaîne de modules photovoltaïques (et non plus au niveau de l'onduleur comme au point précédent).

Ces trois méthodes potentielles permettent de choisir la mesure la plus performante, par exemple en observant successivement l'écart entre chacune des mesures selon les trois approches ci-dessus et une valeur de puissance de référence sur une certaine durée, et en choisissant l'approche de mesure qui permet d'atteindre l'écart type minimum de la distribution de ces écarts sur cette durée. En variante, le choix peut être simplement dicté par la précision intrinsèque des capteurs utilisés selon les trois méthodes.

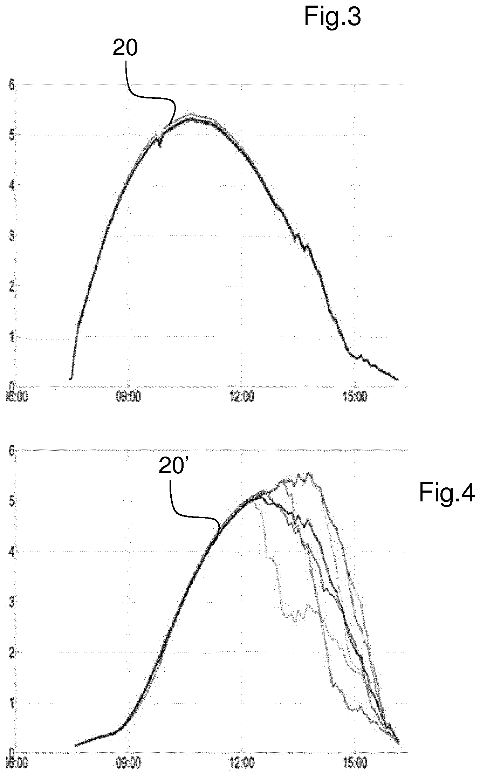

La figure 3 illustre à titre d'exemple les données numériques de mesures mémorisées pour le premier sous-champ 2. Plus précisément, elle montre les courbes 20 d'évolution en fonction du temps des mesures de puissance pour les six ensembles ou strings de modules photovoltaïques du premier sous-champ 2, sur une durée d'une journée. En remarque, le mode de réalisation choisit la journée comme sous-période de traitement : naturellement, la même approche pourrait fonctionner avec une période de durée différente. Toutes les courbes 20 obtenues sont sensiblement superposées, ce qui correspond à un fonctionnement a priori normal du sous-champ observé, dans lequel tous les ensembles de modules photovoltaïques identiques, orientés et inclinés de la même manière, reçoivent la même énergie solaire et produisent la même puissance électrique.

La figure 4 représente les courbes obtenues pour le second sous-champ 2' sur la même période (le second sous-champ 2' comporte ici aussi six ensembles de modules). Contrairement au résultat précédent, il apparait, notamment entre 12h et 17h, des écarts importants entre de nombreuses courbes. Cette configuration illustre une situation anormale, dans laquelle une partie du sous-champ photovoltaïque est masqué par un ombrage, ce qui fait chuter la production électrique des modules photovoltaïques concernés.

Le procédé met en oeuvre une étape d'analyse E2 pour permettre d'identifier plus précisément les mesures traduisant une anomalie dans le fonctionnement du système photovoltaïque, par une analyse des mesures mémorisées à l'étape précédente.

Cette étape d'analyse E2 repose sur la comparaison des différentes mesures d'un même sous-champ. Toutefois, si on considère que le sous-champ comprend N ensembles de modules photovoltaïques, et donc N mesures à un instant donné, une première approche consistant à réaliser toutes les combinaisons de comparaison des mesures deux par deux nécessiterait $N(N-1)/2$ comparaisons, ce qui deviendrait vite très long et lourd à traiter.

Ainsi, selon le mode de réalisation, cette étape d'analyse comprend les sous-étapes suivantes :

- Une étape de calcul E21 d'une valeur de référence Pref à partir des N mesures considérées ;
- Une étape de comparaison E22 de chaque mesure avec la valeur de référence, pour obtenir un diagnostic des ensembles de modules photovoltaïques.

En remarque, la valeur de référence Pref pourrait être une moyenne des N mesures à chaque instant : toutefois, une telle solution ne serait pas pertinente dans le cas où une surface importante du sous-champ photovoltaïque est victime d'un ombrage ou d'une défaillance, c'est-à-dire que les ensembles de modules photovoltaïques de la surface concernée ne reçoivent plus l'énergie solaire totale qu'ils devraient recevoir idéalement et/ou fourniraient une puissance fortement réduite.

Ainsi, la valeur de référence élaborée correspond à la valeur qui serait obtenue sans anomalie, par exemple sans l'ombrage évoqué. Pour atteindre ce résultat, selon un mode de réalisation de l'invention, l'étape de calcul E21 de cette valeur de référence comprend les itérations suivantes :

- Initialisation E211 de la valeur de référence Pref par la moyenne à chaque instant de p mesures considérées Pmes : $Pref = \text{moyenne} (Pmes_i)$ ($i=1$ à $p$). Ce calcul est donc effectué pour tous les instants considérés ;
- Analyse E212 de la distribution statistique des valeurs $(Pmes_i-Pref)/\max(Pref, Pmes_i)$, ou en variante de toute grandeur représentative de l'écart d'une mesure avec la valeur de référence, comme par exemple $(Pmes_i-Pref)/Pref$ ou $(Pmes_i-Pref)/Pmes_i$, voire simplement l'écart $(Pmes_i-Pref)$. Cette analyse permet de calculer de manière empirique l'écart type $\sigma_i$ de la distribution i ($i=1$ à $p$), et optionnellement la moyenne $\mu_i$ de cette distribution i. Cette analyse est répétée séparément pour chaque ensemble d'au moins un module, en considérant toutes les mesures associées à cet ensemble sur la période considérée, ce qui permet d'obtenir une valeur empirique d'écart type $\sigma_i$ pour chaque ensemble ; en variante, une valeur $\sigma$ pourrait être fixée comme une constante du système, ou renseignée par un opérateur par une interface homme machine du système de diagnostic. Toutefois, selon ce mode de réalisation avantageux, elle est calculée empiriquement à partir des mesures, ce qui permet de tenir compte des incertitudes associées aux capteurs de mesure;
- Mise à l'écart E213 des mesures significativement éloignées de la valeur de référence Pref. Cette décision peut être prise par le test statistique dit du vai, où $\sigma i$ est l'écart type de la distribution obtenu empiriquement à l'étape précédente, ou fixé différemment par défaut. Ce test consiste à écarter toutes les mesures Pmesi de tous les ensembles d'au moins un module à un instant donné du sous-champ considéré vérifiant :

$$(Pmesi–Pref)/max(Pref,\ Pmesi) < -v\sigma i$$

où v est un paramètre qui peut être fixé préalablement, par exemple égal à 3, voire entre 2 et 3 inclus. A la fin de cette étape, les mesures trop faibles, correspondant à des anomalies et à des chutes de production d'énergie, sont écartées. Ce test est répété séparément pour chaque ensemble d'au moins un module, en considérant ainsi séparément chaque distribution statistique par ensemble de mesures obtenu par chaque capteur 4, 4'.

En résumé, les étapes précédentes permettent de construire les distributions statistiques pour chaque ensemble de modules, à partir des mesures obtenues pour chaque ensemble de modules à chaque instant, sur la période considérée, selon la période d'acquisition choisie.

Lors de la première itération, les N mesures sont considérées (p = N), pour chaque instant de la période considérée, chaque instant correspondant aux instants de mesures. Puis, au fur et à mesure des itérations, des valeurs sont écartées et l'itération est répétée avec les p valeurs restantes, toujours pour chaque instant de la période considérée. Ces itérations prennent en compte toutes les mesures comparables, c'est-à-dire provenant de modules photovoltaïques de même orientation et inclinaison, c'est-à-dire selon les définitions précédentes de tous les ensembles d'au moins un module photovoltaïque d'un même sous-champ photovoltaïque. Ce processus itératif est donc mis en oeuvre plusieurs fois, pour chaque sous-champ photovoltaïque. De plus, ces itérations peuvent être mises en oeuvre sur toute durée qu'un opérateur souhaite analyser, de préférence suffisamment longue pour obtenir un nombre de mesures important et permettre un traitement statistique efficace. Ainsi, ces itérations peuvent être mises en oeuvre en considérant toute durée choisie, par exemple, sur une durée d'une journée, ou sur une durée d'un ou plusieurs mois.

La fin des itérations est déterminée par une étape de test E214 de fin d'itérations : ce test peut reposer sur un simple compteur de nombre d'itérations, la fin étant déterminée pour un nombre prédéfini d'itérations, par exemple entre 10 et 30. En variante, l'étape de test E214 de fin d'itérations peut reposer sur la comparaison de l'écart entre deux valeurs de référence obtenues sur les deux dernières itérations. En variante, cette étape de test E214 de fin d'itérations peut comparer le nombre de points rejetés à l'itération courante avec celui de l'itération précédente, et décider la fin des itérations si l'écart relatif entre ces nombres est suffisamment faible, par exemple inférieur ou égal à 1%. En sortie de ces itérations, l'étape E21 du procédé a défini une valeur de référence en fonction du temps sur la période considérée. En remarque, cette valeur de référence correspond finalement à la moyenne des mesures, desquelles nous avons écarté les mesures correspondant à des anomalies. Cette valeur de référence correspond ainsi à une valeur qui devrait être constatée au niveau d'un ensemble de modules fonctionnant normalement. Le fait d'obtenir cette valeur par le biais de plusieurs itérations permet d'obtenir une valeur pertinente dans toutes les situations, même celles très défavorables pour lesquelles il existe un taux d'anomalies important, par exemple du fait d'un ombrage qui trouble une surface importante d'un sous-champ photovoltaïque.

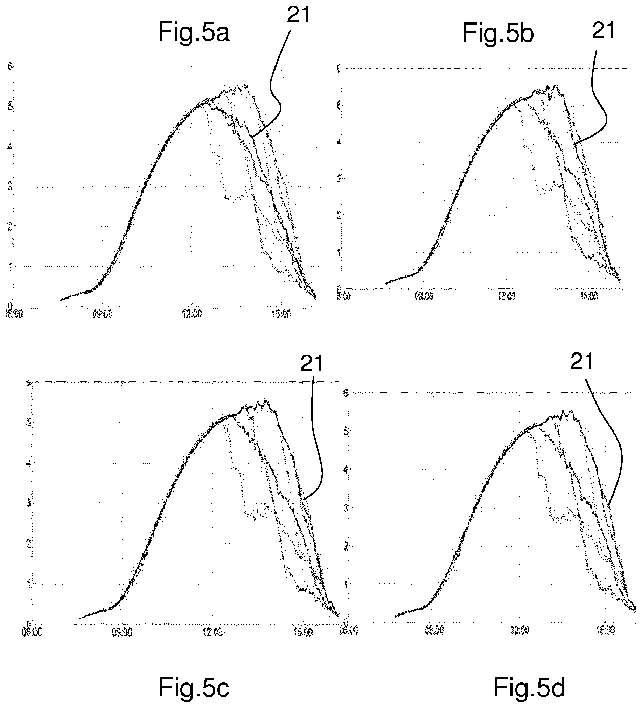

Les figures 5a à 5d illustrent ainsi le mécanisme du mode de réalisation de l'invention, appliqué au scénario représenté par la figure 4 pour le second sous-champ 2' du système photovoltaïque. La figure 5a, qui correspond à la figure 4, représente différentes courbes de mesures reçues par l'unité de gestion 10 depuis les différents capteurs du second sous-champ sur la période considérée, d'une journée de soleil sur cet exemple. La courbe 21 représente plus précisément la valeur moyenne de ces mesures. La figure 5b représente la courbe 21 des valeurs de référence en fonction du temps après l'exécution de la première itération de l'étape de calcul E21, la figure 5c cette même courbe 21 après la seconde itération et la figure 5d cette même courbe après la troisième et dernière itération. Comme cela apparaît, la courbe 21 des valeurs de référence tend à se superposer sur les courbes 20 de plus grandes mesures des ensembles de modules du sous-champ photovoltaïque 2'. En remarque, dans d'autres scénarios, certaines mesures pourraient être trop importantes et soit écartées par le procédé, notamment par la variante de réalisation décrite ci-après, soit conservées mais dans ce cas, la courbe des valeurs de référence ne s'en approcherait pas.

Selon une variante du mode de réalisation de l'invention, une étape complémentaire de traitement statistique E210 de la distribution met en oeuvre un test d'Hampel. Cette étape est intégrée au sein des itérations de l'étape de calcul E21 d'une valeur de référence, et permet d'écarter les mesures Pmes qui vérifient le test suivant :

$$| Pmes – \text{médiane} (Pmes) | > R\ \ \text{médiane} (Pmes – \text{médiane} (Pmes))$$

Où R est une constante fixée en fonction du nombre de capteurs du système photovoltaïque, et par conséquent en fonction du nombre de mesures, par exemple à partir d'une méthode de tirage Monte Carlo. Cette étape de traitement statistique E210 peut être effectuée ne préambule des autres étapes des itérations. Ce test complémentaire permet d'écarter simplement les valeurs qui sont de toutes évidences anormales, qui sont aberrantes, notamment les mesures fortement au-dessus ou au-dessous des autres. Ce test seul ne serait toutefois pas suffisant, et cette étape ne peut se substituer à l'étape de mise à l'écart E213 décrite précédemment.

Selon une autre variante, tout calcul équivalent à un test d'Hampel, permettant d'écarter des valeurs très éloignées des autres, pourrait être mis en oeuvre. A titre d'exemple, les tests ou méthodes connus suivants, par leur dénomination anglaise, pourraient en variante être implémentés : Thompson Tau test, Grubbs test, Tietjen-Moore test, Boxplot méthode, Moving window filtering méthode (filtrage par fenêtres dynamiques), Generalized Extreme Studentized Deviate test.

Lorsque la valeur de référence Pref est calculée, le procédé met en oeuvre une étape de comparaison E22 qui consiste à comparer les mesures d'un certain capteur avec la valeur de référence, sur toute une durée considérée. Selon une première approche simple, toutes les mesures éloignées d'un certain pourcentage prédéfini, par exemple pour un écart supérieur ou égal à 10%, voire supérieur ou égal à 5%, sont considérées comme des anomalies. En variante préférée, cette étape de comparaison met en oeuvre une analyse statistique des écarts entre les mesures et la valeur de référence : ces écarts ou toutes grandeurs équivalentes forment une distribution de données selon une loi normale, ce qui permet avantageusement de les traiter statistiquement, notamment à partir de l'écart type et/ou la valeur moyenne. Cette configuration permet un traitement avantageux et bien contrôlé et fiable. Si la valeur moyenne de cette distribution s'écarte d'une valeur nulle d'un certain seuil, alors cela signifie qu'il existe un biais dont l'origine peut être liée à des pertes d'énergie au sein de composants du système photovoltaïque. Naturellement, l'écart type permet de caractériser la dispersion de la distribution statistique. Lorsque cette analyse montre des anomalies au niveau d'un certain ensemble de modules, un test complémentaire peut consister à observer la répartition de ces anomalies dans le temps, ou à refaire ce test sur des sous-périodes pour vérifier si les anomalies sont répétées sur toute la période ou concentrées sur une certaine durée, ce qui peut par exemple correspondre à un ombrage.

Ainsi, l'étape de comparaison E22 permet d'en déduire le positionnement d'une éventuelle défaillance sur le sous-champ photovoltaïque, par l'intermédiaire des mesures locales réalisées.

En complément, le procédé permet aussi la mise en oeuvre d'une étape de calcul de la perte d'énergie E23 résultante d'une anomalie, puisque la valeur de référence permet de connaître la situation qui aurait été obtenue sans anomalie. Pour cela, la perte est calculée à partir de la différence entre la puissance de référence calculée à chaque instant et la puissance réelle observée, pour un sous-champ ou une sous-partie du sous-champ et sur toute période souhaitée. Cette étape permet aussi d'estimer la production d'énergie du système photovoltaïque dans son état normal.

De préférence, les différents capteurs du système photovoltaïque transmettent des mesures aux mêmes instants, selon une même période, pour permettre à un instant donné de comparer les différentes mesures. En variante, ces périodes de mesures pourraient être différentes, et d'autres valeurs intermédiaires pourraient être extrapolées à partir de certaines mesures, et considérées comme des mesures dans la mise en oeuvre du procédé.

D'autre part, le procédé est performant en considérant plusieurs ensembles de modules comparables. Pour cela, il est avantageux d'avoir au moins trois ensembles. De plus, ces ensembles de modules ont une même orientation et inclinaison, comme explicité précédemment, mais présentent aussi une même architecture : un même nombre de modules photovoltaïques, des mêmes types de modules photovoltaïques. En variante, certains ensembles de modules peuvent présenter des différences, qui peuvent être compensées lors des calculs, pour comparer des mesures comparables. A titre d'exemple, des ensembles de modules peuvent être associés à des puissances crêtes différentes, et le procédé met alors en oeuvre une étape préalable de normalisation des mesures en les divisant par leur puissance crête respective.

Il apparaît ainsi que le procédé est simple à mettre en oeuvre, ne nécessite pas des ressources intenses, mais peut être mis en oeuvre avec une unité de gestion simple tout en obtenant des temps de calcul très faibles, ce qui peut permettre une mise en oeuvre très fréquente et/ou à partir d'un grand nombre de mesures, mesurées selon une fréquence élevée.

Le procédé a été décrit comme permettant une analyse a posteriori, en analysant par exemple toutes les mesures obtenues sur une journée passée pour en déduire un diagnostic du fonctionnement d'un système photovoltaïque. Comme le procédé est simple et rapide à mettre en oeuvre, il peut être exécuté de nombreuses fois, sur des périodes assez courtes, ce qui permet d'obtenir un diagnostic en quasi temps réel, pour engager des actions rectificatives très rapidement si nécessaire et maintenir la production d'énergie à son maximum à tout moment.

Naturellement, en cas de détection d'une anomalie, le procédé peut déclencher la transmission d'une alerte vers un opérateur, par toute interface homme machine.

A cet effet, un problème technique complémentaire à l'invention décrite précédemment se pose : comment présenter les résultats de diagnostic de manière conviviale et performante à un opérateur pour qu'il puisse les exploiter facilement ?

Une approche consiste à présenter à un opérateur les données suivantes, par exemple sur un écran associé à l'unité de gestion 10 du système photovoltaïque, sur un même graphe représentant un nombre d'heures (ou de toute autre unité temporelle) en fonction du temps, ou sur plusieurs graphes distincts, pour un ensemble d'au moins un modules considéré :

- Le nombre d'heures d'absence de mesures, ce qui peut traduire une défaillance matérielle du système, par exemple au niveau du ou des capteurs 4, 4' concerné(s), et ce qui ne permet pas la mise en oeuvre correcte du procédé de diagnostic si ces absences sont importantes, et ne permet donc pas de conclure à une anomalie de production photovoltaïque ;
- Le nombre d'heures d'arrêt de production d'un ensemble de modules, auquel cas la mise en oeuvre du procédé de diagnostic décrit précédemment n'est pas pertinente ;
- Le nombre d'heures d'anomalie.

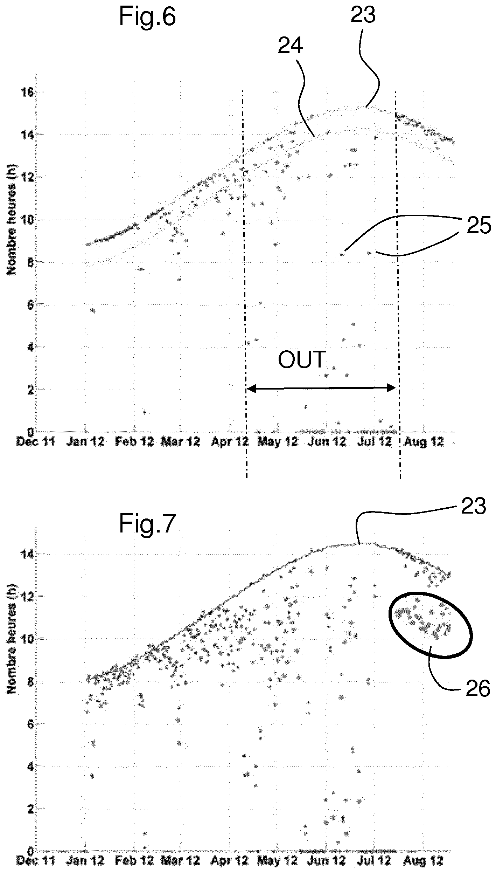

La figure 6 représente ainsi une courbe 23 qui illustre un nombre d'heures d'irradiance non nulle, ou d'irradiance exploitable, au niveau d'un ensemble de modules particulier du système photovoltaïque, en fonction du temps. Sur ce graphe, des marques 25 sont ajoutées, sous forme de simples croix, pour chaque jour ou toute sous-période d'une durée choisie, qui représentent le nombre d'heures durant lesquelles le système de diagnostic du système photovoltaïque reçoit des mesures. Enfin, une courbe 24, séparée d'un certain seuil constant de la courbe 23 est représentée, ce seuil étant choisi à une heure selon l'exemple représenté. La figure 6 permet ainsi de s'apercevoir facilement que le système de diagnostic n'a pas fonctionné sur toute la période indiquée « OUT », pour laquelle le nombre d'heures de mesures est tombé sous la courbe seuil 24. Il met aussi en évidence certains jours plus ou moins isolés hors de cette période, pour lesquels le système de diagnostic a été défaillant, car ne fonctionnant pas pendant plus d'une heure au-delà de l'irradiance disponible. En revanche, toutes les marques 25 disposées au-dessus de la courbe 24 correspondent à des périodes de bon fonctionnement du système de diagnostic, puisque les mesures de suivi sont réalisées en nombre suffisant. Naturellement, les périodes choisies de nombre d'heures en ordonnées, et de mois/jours en abscisse, peuvent être modifiées en toute autre unité de mesure du temps.

Selon la même approche, il peut être choisi de représenter sur un tel graphe le nombre d'heures d'arrêt de production d'un certain ensemble de modules et le nombre d'heures de fonctionnement avec anomalies, obtenu par la mise en oeuvre du procédé de diagnostic décrit précédemment. Pour cela, le procédé peut être mis en oeuvre sur des sous-périodes d'une heure. A titre d'exemple, la figure 7 représente un même graphe sur lequel sont ajoutées des marques 26 représentant le nombre d'heures par jour pendant lesquelles la production d'énergie est considérée sans anomalie.

**Revendications**

1.  Procédé de diagnostic d'un système photovoltaïque (1) comprenant au moins un sous-champ photovoltaïque (2) comprenant des modules photovoltaïques de même orientation et inclinaison, regroupés en plusieurs ensembles d'au moins un module (3) photovoltaïque comparables, chaque ensemble d'au moins un module (3) étant associé à au moins un capteur (4, 4') de mesure d'une grandeur électrique caractéristique dudit ensemble d'au moins un module (3), **caractérisé en ce qu'**il comprend les étapes suivantes :

    (E1) - mesures d'au moins une grandeur électrique par chaque capteur (4, 4') à plusieurs instants d'une période considérée ;
    (E2) - analyse des mesures de grandeur électrique comprenant les sous-étapes suivantes :

       (E21) - calcul d'une valeur de référence à partir des mesures de grandeur électrique associées à plusieurs ensembles d'au moins un module (3) du même sous-champ photovoltaïque (2) par des itérations permettant de mettre à l'écart à chaque itération des mesures correspondant à des chutes de production d'énergie d'un ensemble d'au moins un module ;
       (E22) - comparaison des mesures associées à un ensemble d'au moins un module (3) avec la valeur de référence sur une durée choisie pour en déduire ou non une défaillance dudit ensemble d'au moins un module (3) sur ladite durée.

2.  Procédé de diagnostic d'un système photovoltaïque (1) selon la revendication précédente, **caractérisé en ce que** l'étape de calcul d'une valeur de référence (E21) comprend des itérations des sous-étapes suivantes :

    (E211) : initialisation d'une valeur de référence Pref à partir de tout ou partie des mesures Pmes de grandeur électrique ;

(E213) : Mise à l'écart des mesures Pmes de grandeur électrique significativement éloignées de la valeur de référence Pref par un test statistique sur une distribution de valeurs représentatives de l'écart entre les mesures et les valeurs de référence, notamment les valeurs (Pmes-Pref)/max(Pref, Pmes), ce test statistique consistant alors à écarter toutes les mesures Pmes vérifiant :

$$(Pmes–Pref)/max(Pref, Pmes) < -v\sigma$$

où v est un paramètre qui peut être fixé préalablement et $\sigma$ est une valeur seuil prédéfinie, et retour à l'étape précédente si les itérations ne sont pas terminées.

3. Procédé de diagnostic d'un système photovoltaïque (1) selon la revendication précédente, **caractérisé en ce que** l'étape de calcul d'une valeur de référence (E21) comprend dans ses itérations la sous-étape supplémentaire suivante :
(E212) : détermination empirique de la valeur seuil $\sigma$, et optionnellement de la moyenne $\mu$, comme l'écart type de la distribution statistique de valeurs représentatives de l'écart entre les mesures et les valeurs de référence, notamment (Pmes-Pref)/max(Pref, Pmes), pour toutes les mesures Pmes de grandeur électrique sur la période considérée et pour tous les ensembles d'au moins un module (3) considérés du même sous-champ photovoltaïque (2).

4. Procédé de diagnostic d'un système photovoltaïque (1) selon l'une des revendications précédentes, **caractérisé en ce que** l'étape de calcul d'une valeur de référence (E21) comprend une étape de test (E214) de fin d'itérations qui repose sur un compteur de nombre d'itérations, la fin des itérations étant déterminée pour un nombre prédéfini d'itérations, ou qui repose sur le calcul de l'écart des valeurs de référence entre les deux dernières itérations, la fin des itérations étant déterminée lorsque cet écart tombe sous un certain seuil ou qui repose sur la comparaison du nombre de mesures mises à l'écart entre les deux dernières itérations, la fin des itérations étant déterminée lorsque cet écart tombe sous un certain seuil.

5. Procédé de diagnostic d'un système photovoltaïque (1) selon l'une des revendications précédentes, **caractérisé en ce que** l'étape de calcul d'une valeur de référence (E21) comprend une étape de traitement statistique (E210) des mesures Pmes de grandeur électrique pour écarter les mesures Pmes de grandeur électrique aberrantes, notamment par un test d'Hampel, qui comprend la mise à l'écart des mesures vérifiant le test suivant :

$$| Pmes – médiane (Pmes) | > R \quad médiane (Pmes – médiane (Pmes))$$

Où R est une constante fixée en fonction du nombre de capteurs du système photovoltaïque.

6. Procédé de diagnostic d'un système photovoltaïque (1) selon l'une des revendications précédentes, **caractérisé en ce que** l'étape de comparaison des mesures de grandeur électrique avec la valeur de référence (E22) comprend la comparaison des mesures de grandeur électrique d'un certain capteur avec la valeur de référence selon une analyse statistique des écarts entre lesdites mesures de grandeur électrique et la valeur de référence, prenant en compte l'écart type et/ou la valeur moyenne.

7. Procédé de diagnostic d'un système photovoltaïque (1) selon l'une des revendications précédentes, **caractérisé en ce que** la grandeur électrique mesurée est la puissance produite par un ensemble d'au moins un module photovoltaïque (3) à un instant donné ou le courant ou la tension aux bornes d'au moins un module photovoltaïque (3) à un instant donné.

8. Procédé de diagnostic d'un système photovoltaïque (1) selon la revendication précédente, **caractérisé en ce qu'**il comprend la mise en oeuvre d'une étape supplémentaire de calcul de la perte d'énergie (E23) résultant d'une défaillance du système photovoltaïque, à partir de la différence à chaque instant entre la puissance de référence calculée et la puissance réelle mesurée.

9. Procédé de diagnostic d'un système photovoltaïque (1) selon l'une des revendications précédentes, **caractérisé en ce qu'**il comprend une étape d'affichage par l'intermédiaire d'une interface homme machine d'un graphe représentant tout ou partie des données suivantes pour un ensemble d'au moins un module photovoltaïque considéré en fonction du temps :

- Le nombre de sous-périodes ou une durée sur une sous-période d'absence de mesures ;
- Le nombre de sous-périodes ou une durée sur une sous-période d'arrêt de production ;
- Le nombre de sous-périodes ou une durée sur une sous-période de défaillance.

10. Système photovoltaïque (1), **caractérisé en ce qu'**il comprend au moins un sous-champ photovoltaïque (2, 2') comprenant des modules photovoltaïques de même orientation et inclinaison, regroupés en plusieurs ensembles d'au moins un module (3, 3') photovoltaïque comparables, chaque ensemble d'au moins un module (3, 3') photovoltaïque étant associé à au moins un capteur (4, 4') de mesure d'une grandeur électrique caractéristique dudit ensemble d'au moins un module photovoltaïque (3, 3'), **caractérisé en ce qu'**il comprend une unité de gestion (10) qui comprend des moyens logiciels qui mettent en oeuvre le procédé de diagnostic du système photovoltaïque (1) selon l'une des revendications précédentes.

11. Système photovoltaïque (1) selon la revendication précédente, **caractérisé en ce qu'**il comprend plusieurs sous-champs photovoltaïques (2, 2') d'orientation et/ou inclinaison différentes, et **en ce que** l'unité de gestion (10) met en oeuvre le procédé de diagnostic du système photovoltaïque (1) selon l'une des revendications 1 à 9 en comparant entre elles les mesures de grandeur électrique d'ensembles d'au moins un module photovoltaïque de même orientation et inclinaison.

12. Système photovoltaïque (1) selon la revendication 10 ou 11, **caractérisé en ce qu'**un ensemble d'au moins un module (3, 3') photovoltaïque est une chaine de plusieurs modules photovoltaïques connectés en série et **en ce que** le capteur (4, 4') de mesure d'une grandeur électrique est intégré dans un onduleur associé à ladite chaine de modules photovoltaïques.

13. Support d'enregistrement de données lisible par un calculateur sur lequel est enregistré un programme d'ordinateur comprenant des moyens logiciels de mise en oeuvre des étapes du procédé de diagnostic selon l'une des revendications 1 à 9.

**Patentansprüche**

1. Verfahren zur Diagnose eines Photovoltaiksystems (1), das mindestens ein Photovoltaik-Teilfeld (2) enthält, welches Photovoltaikmodule gleicher Ausrichtung und Neigung enthält, zusammengefasst in mehreren vergleichbaren Einheiten aus mindestens einem Photovoltaikmodul (3), wobei jede Einheit aus mindestens einem Modul (3) mindestens einem Sensor (4, 4') zum Messen einer charakteristischen elektrischen Größe der Einheit aus mindestens einem Modul (3) zugeordnet ist, **dadurch gekennzeichnet, dass** es die folgenden Schritte enthält:

(E1) Messungen mindestens einer elektrischen Größe durch jeden Sensor (4, 4') zu mehreren Zeitpunkten eines betrachteten Zeitraums;
(E2) Analyse der Messungen elektrischer Größe, die die folgenden Teilschritte enthält:

(E21)Berechnung eines Bezugswerts ausgehend von den Messungen elektrischer Größe, die mehreren Einheiten aus mindestens einem Modul (3) des gleichen Photovoltaik-Teilfelds (2) zugeordnet sind, durch Iterationen, die es ermöglichen, bei jeder Iteration Messungen auszuschließen, die Energieerzeugungsabfällen einer Einheit aus mindestens einem Modul entsprechen;
(E22)Vergleich der einer Einheit aus mindestens einem Modul (3) zugeordneten Messungen mit dem Bezugswert über eine gewählte Dauer, um daraus einen Ausfall der Einheit aus mindestens einem Modul (3) während dieser Dauer abzuleiten oder nicht.

2. Diagnoseverfahren eines Photovoltaiksystems (1) nach dem vorhergehenden Anspruch, **dadurch gekennzeichnet, dass** der Schritt der Berechnung eines Bezugswerts (E21) Iterationen der folgenden Teilschritte enthält:

(E211): Initialisierung eines Bezugswerts Pref ausgehend von allen oder einem Teil der Messungen Pmes elektrischer Größe;
(E213): Ausschließen der Messungen Pmes elektrischer Größe, die deutlich vom Bezugswert Pref entfernt sind, durch einen statistischen Test an einer Verteilung von Werten, die für die Abweichung zwischen den Messungen und den Bezugswerten repräsentativ sind, insbesondere die Werte (Pmes-Pref)/max(Pref, Pmes), wobei dieser statistische Test dann darin besteht, alle Messungen Pmes auszuschließen, die erfüllen:

$$(Pmes-Pref)/max(Pref, \ Pmes) \ < \ -v\sigma,$$

wobei v ein Parameter ist, der vorab festgelegt werden kann, und σ ein vordefinierter Schwellwert ist, und Rückkehr zum vorhergehenden Schritt, wenn die Iterationen nicht beendet sind.

3. Diagnoseverfahren eines Photovoltaiksystems (1) nach dem vorhergehenden Anspruch, **dadurch gekennzeichnet, dass** der Schritt der Berechnung eines Bezugswerts (E21) in seinen Iterationen den folgenden zusätzlichen Teilschritt enthält:
(E212): empirische Bestimmung des Schwellwerts σ, und optional des Mittelwerts μ, als Standardabweichung der statistischen Verteilung von Werten, die für die Abweichung zwischen den Messungen und den Bezugswerten repräsentativ sind, insbesondere (Pmes-Pref)/max(Pref, Pmes), für alle Messungen Pmes elektrischer Größe über den betrachteten Zeitraum und für alle betrachteten Einheiten aus mindestens einem Modul (3) des gleichen Photovoltaik-Teilfelds (2).

4. Diagnoseverfahren eines Photovoltaiksystems (1) nach einem der vorhergehenden Ansprüche, **dadurch gekennzeichnet, dass** der Schritt der Berechnung eines Bezugswerts (E21) einen Testschritt (E214) des Endes von Iterationen enthält, der auf einem Zähler der Anzahl von Iterationen beruht, wobei das Ende der Iterationen für eine vordefinierte Anzahl von Iterationen bestimmt wird, oder der auf der Berechnung der Abweichung der Bezugswerte zwischen den zwei letzten Iterationen beruht, wobei das Ende der Iterationen bestimmt wird, wenn diese Abweichung unter eine bestimmte Schwelle fällt, oder der auf dem Vergleich der Anzahl von Messungen beruht, die zwischen den zwei letzten Iterationen ausgeschlossen wurden, wobei das Ende der Iterationen bestimmt wird, wenn diese Abweichung unter eine bestimmte Schwelle fällt.

5. Diagnoseverfahren eines Photovoltaiksystems (1) nach einem der vorhergehenden Ansprüche, **dadurch gekennzeichnet, dass** der Schritt der Berechnung eines Bezugswerts (E21) einen Schritt der statistischen Verarbeitung (E210) der Messungen Pmes elektrischer Größe enthält, um die abweichenden Messungen Pmes elektrischer Größe auszuschließen, insbesondere durch einen Hampel-Test, der das Ausschließen der Messungen enthält, die den folgenden Test erfüllen:

$$| \ Pmes \ - \ median \ (Pmes) \ | \ > R \ median \ (Pmes \ - \ median \ (Pmes))$$

wobei R eine Konstante ist, die abhängig von der Anzahl von Sensoren des Photovoltaiksystems festgelegt wird.

6. Diagnoseverfahren eines Photovoltaiksystems (1) nach einem der vorhergehenden Ansprüche, **dadurch gekennzeichnet, dass** der Schritt des Vergleichs der Messungen elektrischer Größe mit dem Bezugswert (E22) den Vergleich der Messungen elektrischer Größe eines bestimmten Sensors mit dem Bezugswert gemäß einer statistischen Analyse der Abweichungen zwischen den Messungen elektrischer Größe und dem Bezugswert enthält, unter Berücksichtigung der Standardabweichung und/oder des Mittelwerts.

7. Diagnoseverfahren eines Photovoltaiksystems (1) nach einem der vorhergehenden Ansprüche, **dadurch gekennzeichnet, dass** die gemessene elektrische Größe die von einer Einheit aus mindestens einem Photovoltaikmodul (3) zu einem gegebenen Zeitpunkt erzeugte Leistung oder der Strom oder die Spannung an den Klemmen mindestens eines Photovoltaikmoduls (3) zu einem gegebenen Zeitpunkt ist.

8. Diagnoseverfahren eines Photovoltaiksystems (1) nach dem vorhergehenden Anspruch, **dadurch gekennzeichnet, dass** es die Durchführung eines zusätzlichen Schritts der Berechnung des Energieverlusts (E23) enthält, der aus einem Ausfall des Photovoltaiksystems resultiert, ausgehend vom Unterschied zu jedem Zeitpunkt zwischen der berechneten Bezugsleistung und der gemessenen tatsächlichen Leistung.

9. Diagnoseverfahren eines Photovoltaiksystems (1) nach einem der vorhergehenden Ansprüche, **dadurch gekennzeichnet, dass** es einen Schritt der Anzeige mittels einer Mensch-Maschine-Schnittstelle eines Graphs enthält, der alle oder einen Teil der folgenden Daten für eine betrachtete Einheit aus mindestens einem Photovoltaikmodul abhängig von der Zeit darstellt:

- die Anzahl von Teilzeiträumen oder eine Dauer über einen Teilzeitraum der Abwesenheit von Messungen;
- die Anzahl von Teilzeiträumen oder eine Dauer über einen Teilzeitraum der Erzeugungsunterbrechung;
- die Anzahl von Teilzeiträumen oder eine Dauer über einen Teilzeitraum des Ausfalls.

10. Photovoltaiksystem (1), **dadurch gekennzeichnet, dass** es mindestens ein Photovoltaik-Teilfeld (2, 2') enthält, das Photovoltaikmodule gleicher Ausrichtung und Neigung enthält, zusammengefasst in mehreren vergleichbaren Einheiten aus mindestens einem Photovoltaikmodul (3, 3'), wobei jede Einheit aus mindestens einem Photovoltaikmodul (3, 3') mindestens einem Sensor (4, 4') zur Messung einer für die Einheit aus mindestens einem Photovoltaikmodul (3, 3') charakteristischen Größe zugeordnet ist, **dadurch gekennzeichnet, dass** es eine Verwaltungseinheit (10) enthält, die Softwareeinrichtungen enthält, welche das Diagnoseverfahren des Photovoltaiksystems (1) nach einem der vorhergehenden Ansprüche durchführen.

11. Photovoltaiksystem (1) nach dem vorhergehenden Anspruch, **dadurch gekennzeichnet, dass** es mehrere Photovoltaik-Teilfelder (2, 2') unterschiedlicher Ausrichtung und/oder Neigung enthält, und dass die Verwaltungseinheit (10) das Diagnoseverfahren des Photovoltaiksystems (1) nach einem der Ansprüche 1 bis 9 durchführt, indem sie die Messungen elektrischer Größe von Einheiten aus mindestens einem Photovoltaikmodul gleicher Ausrichtung und Neigung miteinander vergleicht.

12. Photovoltaiksystem (1) nach Anspruch 10 oder 11, **dadurch gekennzeichnet, dass** eine Einheit aus mindestens einem Photovoltaikmodul (3, 3') eine Kette mehrerer in Reihe geschalteter Photovoltaikmodule ist, und dass der Sensor (4, 4') zur Messung einer elektrischen Größe in einen der Kette von Photovoltaikmodulen zugeordneten Wechselrichter integriert ist.

13. Datenspeicherträger, der von einem Rechner lesbar ist, auf dem ein Computerprogramm gespeichert ist, das Softwareeinrichtungen zur Durchführung der Schritte des Diagnoseverfahrens nach einem der Ansprüche 1 bis 9 enthält.

## Claims

1. Diagnosis method for a photovoltaic system (1) comprising at least one photovoltaic subarray (2) comprising photovoltaic modules having the same orientation and tilt, grouped together into multiple assemblies of one or more similar photovoltaic modules (3), each assembly of one or more modules (3) being associated with at least one sensor (4, 4') for measuring a characteristic electrical quantity of said assembly of one or more modules (3), **characterized in that** it comprises the following steps:

   (E1) - measuring at least one electrical quantity by means of each sensor (4, 4') at multiple times over a period under consideration;
   (E2) - analysing the electrical quantity measurements, comprising the following substeps:

   (E21) - calculating a reference value on the basis of the electrical quantity measurements associated with multiple assemblies of one or more modules (3) of the same photovoltaic subarray (2) through iterations making it possible to set aside, on each iteration, measurements corresponding to drops in the energy production of an assembly of one or more modules;
   (E22) - comparing the measurements associated with an assembly of one or more modules (3) with the reference value over a chosen duration so as to deduce therefrom the presence or absence of a fault in said assembly of one or more modules (3) over said duration.

2. Diagnosis method for a photovoltaic system (1) according to the preceding claim, **characterized in that** the step of calculating a reference value (E21) comprises iterations of the following substeps:

   (E211): initializing a reference value Pref on the basis of all or some of the electrical quantity measurements Pmes;
   (E213): setting aside those electrical quantity measurements Pmes which deviate substantially from the reference value Pref by means of a statistical test on a distribution of values that are representative of the difference between the measurements and the reference values, in particular the values (Pmes - Pref)/max(Pref, Pmes), this statistical test then consisting in setting aside all those measurements Pmes satisfying:

$$(Pmes - Pref)/max(Pref, Pmes) < - v\sigma,$$

where v is a parameter which may be set beforehand and $\sigma$ is a predefined threshold value, and returning to the preceding step if the iterations are not ended.

3. Diagnosis method for a photovoltaic system (1) according to the preceding claim, **characterized in that** the step of calculating a reference value (E21) comprises, in its iterations, the following additional substep:
(E212): empirically determining the threshold value $\sigma$, and optionally the mean $\mu$, as the standard deviation of the statistical distribution of values that are representative of the difference between the measurements and the reference values, in particular (Pmes - Pref)/max(Pref, Pmes), for all of the electrical quantity measurements Pmes over the period under consideration and for all of the assemblies of one or more modules (3) under consideration of the same photovoltaic subarray (2).

4. Diagnosis method for a photovoltaic system (1) according to one of the preceding claims, **characterized in that** the step of calculating a reference value (E21) comprises an end-of-iteration test step (E214) which is based on a counter counting the number of iterations, the end of the iterations being determined for a predefined number of iterations, or which is based on calculating the difference in the reference values between the last two iterations, the end of the iterations being determined when this difference falls below a certain threshold, or which is based on comparing the number of measurements set aside between the last two iterations, the end of the iterations being determined when this difference falls below a certain threshold.

5. Diagnosis method for a photovoltaic system (1) according to one of the preceding claims, **characterized in that** the step of calculating a reference value (E21) comprises a step of statistically processing (E210) the electrical quantity measurements Pmes so as to set aside those electrical quantity measurements Pmes which are aberrant, in particular by means of a Hampel test, which comprises setting aside those measurements which satisfy the following test:

$$|Pmes - median(Pmes)| > R\ median(Pmes - median(Pmes))$$

where R is a constant set according to the number of sensors of the photovoltaic system.

6. Diagnosis method for a photovoltaic system (1) according to one of the preceding claims, **characterized in that** the step of comparing the electrical quantity measurements with the reference value (E22) comprises comparing the electrical quantity measurements from a certain sensor with the reference value according to a statistical analysis of the differences between said electrical quantity measurements and the reference value, taking the standard deviation and/or the mean value into account.

7. Diagnosis method for a photovoltaic system (1) according to one of the preceding claims, **characterized in that** the measured electrical quantity is the power produced by an assembly of one or more photovoltaic modules (3) at a given time or the current or voltage across the terminals of one or more photovoltaic modules (3) at a given time.

8. Diagnosis method for a photovoltaic system (1) according to the preceding claim, **characterized in that** it comprises the implementation of an additional step of calculating the energy loss (E23) resulting from a fault in the photovoltaic system on the basis of the difference, at each time, between the calculated reference power and the measured actual power.

9. Diagnosis method for a photovoltaic system (1) according to one of the preceding claims, **characterized in that** it comprises a step of displaying, via a human-machine interface, a graph representing all or part of the following data for an assembly of one or more photovoltaic modules under consideration as a function of time:

- the number of subperiods or a duration over one subperiod without measurements;
- the number of subperiods or a duration over one subperiod with production stopped;
- the number of subperiods or a duration over one subperiod with a fault.

10. Photovoltaic system (1), **characterized in that** it comprises at least one photovoltaic subarray (2, 2') comprising photovoltaic modules having the same orientation and tilt, grouped together into multiple assemblies of one or more similar photovoltaic modules (3, 3'), each assembly of one or more photovoltaic modules (3, 3') being associated with at least one sensor (4, 4') for measuring a characteristic electrical quantity of said assembly of one or more photovoltaic modules (3, 3'), **characterized in that** it comprises a management unit (10) which comprises software means which implement the diagnosis method for the photovoltaic system (1) according to one of the preceding claims.

11. Photovoltaic system (1) according to the preceding claim, **characterized in that** it comprises multiple photovoltaic subarrays (2, 2') having different orientations and/or tilts, and **in that** the management unit (10) implements the diagnosis method for the photovoltaic system (1) according to one of Claims 1 to 9 by comparing the electrical quantity measurements of assemblies of one or more photovoltaic modules having the same orientation and tilt with one another.

12. Photovoltaic system (1) according to Claim 10 or 11, **characterized in that** an assembly of one or more photovoltaic modules (3, 3') is a chain of multiple photovoltaic modules connected in series and **in that** the sensor (4, 4') for measuring an electrical quantity is incorporated in an inverter associated with said chain of photovoltaic modules.

13. Data storage medium that can be read by a computer, on which medium a computer program is stored comprising software means for implementing the steps of the diagnosis method according to one of claims 1 to 9.

Fig.1

## Fig.2

E1 — Mesure d'au moins une grandeur électrique

E2 — Analyse

E21 — Calcul d'une valeur de référence

E210 — Test d'Hampel

E211 — Initialisation valeur de référence

E212 — Analyse statistique

E213 — Mise à l'écart de mesures

E214 — Test de fin

E22 — Comparaison, détection de défaillance

E23 — Calcul d'une perte d'énergie

Fig.3

Fig.4

Fig.5a

21

Fig.5b

21

Fig.5c

21

Fig.5d

21

## Fig.6

## Fig.7

**RÉFÉRENCES CITÉES DANS LA DESCRIPTION**

**Documents brevets cités dans la description**

- WO 2013170422 A
- DE 102012102932